(19) Europäisches Patentamt
European Patent Office
Office européen des brevets

(11) Publication number: 0 030 104
B1

(12) EUROPEAN PATENT SPECIFICATION

(45) Date of publication of patent specification: 22.08.84

(51) Int. Cl.$^3$: C 08 J 3/02, C 08 F 214/18, C 08 J 3/10, C 08 J 5/22

(21) Application number: 80304164.9

(22) Date of filing: 20.11.80

# (54) Process for preparing organic dispersion of acid-type fluorinated polymer.

(30) Priority: 20.11.79 JP 149479/79
07.12.79 JP 157989/79

(43) Date of publication of application:
10.06.81 Bulletin 81/23

(45) Publication of the grant of the patent:
22.08.84 Bulletin 84/34

(84) Designated Contracting States:
DE FR GB IT NL

(56) References cited:
GB-A-1 094 349
GB-A-1 550 874
GB-A-1 552 060
JP-A-13 049 576
JP-A-49 009 078
US-A-2 937 156
US-A-3 631 141
US-A-3 637 569
US-A-3 769 252

(73) Proprietor: ASAHI GLASS COMPANY LTD.
No. 1-2, Marunouchi 2-chome
Chiyoda-ku, Tokyo (JP)

(72) Inventor: Miyake, Haruhisa
No. 62 Kuritaya Kanagawa-ku
Yokohama-shi Kanagawa-ken (JP)
Inventor: Asawa, Tatsuro
No. 472 Hiyoshihoncho Kohhoku-ku
Yokohama-shi Kanagawa-ken (JP)

(74) Representative: Warden, John Christopher et al
R.G.C. Jenkins & Co. 12-15, Fetter Lane
London EC4A 1PL (GB)

EP 0 030 104 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for preparing an organic dispersion of an acid-type fluorinated polymer. More particularly, it relates to a novel process for preparing an organic dispersion of high concentration by replacing the aqueous medium of an aqueous dispersion, obtained by a copolymerization in an aqueous medium, with a hydrophilic organic medium while maintaining the dispersion.

Fluorinated polymers are usually resistant to organic solvents and accordingly organic solutions of fluorinated polymers are unusual. In particular, few organic solvents are known which can dissolve fluorinated polymers having many fluorine atoms bonded to each carbon atom of a main chain skeleton.

On the other hand, if such a solution of a fluorinated polymer can be obtained, various applications of the fluorinated polymers will be developed.

It has been noted that copolymers of a fluorinated olefin such as tetrafluoroethylene and a fluorinated monomer having carboxylic acid-type or sulfonic acid-type groups can be used to make a cation exchange membrane having excellent oxidation resistance, chlorine resistance, alkali resistance and heat resistance which can be used for producing an alkali metal hydroxide and chlorine, as a membrane for a fuel cell, membrane for dialysis or for other uses. If an organic solvent solution of the acid-type fluorinated polymer can be obtained, the fabrication of a membrane from the polymer is facilitated so that a membrane having a complicated configuration, or a remarkably thin membrane, can be obtained. Furthermore, a membrane can be smoothly obtained by a dipping process, pin holes of a membrane can be easily repaired and the surface of a product can be easily coated with the fluorinated polymer.

In the case of fluorinated polymers having strong acidic groups of high polarity such as sulfonic acid groups, it has been found that certain fluorinated polymers having a specific form such as sulfonic acid, sulfamide or sulfonate can be dissolved in a special organic solvent of high polarity as disclosed in Japanese Patent Publication No. 13,333/1973. On the other hand, in the case of a fluorinated polymer having carboxylic acid groups, the polymers cannot be dissolved in the organic solvents which dissolve the sulfonic acid-type fluorinated polymer because of the carboxylic acid group of the polymer.

Organic solvent solutions of carboxylic acid-type fluorinated polymer have been disclosed in Japanese Unexamined Patent Publication No. 107949/1979, the fluorinated polymer having carboxylic acid salt groups —COOQ (Q: alkali metal atom) and being dissolved in an organic solvent of high polarity such as an alcohol or glycol. Japanese Patent application No. 56912/1979 discloses solutions of fluorinated polymers having pendant carboxylic ester groups in a fluorinated organic solvent such as trichlorotrifluoroethane or trifluoromethylbenzene.

According to our research, it is difficult to increase the concentration of the fluorinated polymer in such organic solvent solutions. Only solutions having a concentration of up to 5 wt. % have been obtained. It is desirable to increase the concentration of the fluorinated polymer for the fabrication of a membrane from the solution.

US—A—2937156 discloses the preparation of organic dispersions of polytetrafluoroethylene (PTFE) with a relatively low water content by adding a water-miscible organic solvent such as glycol and evaporating off the water. Dispersions of relatively high polymer concentration can be obtained in this way, but the dispersions also contain 3 to 20 wt. %, based on the polymer, of a dispersing agent which can cause problems when the dispersion is used for coating.

GB—A—1094349 discloses a process in which an aqueous dispersion of a polymer such as PTFE, containing an emulsifier, is mixed with formamide (optionally mixed with a glycol) and one or more of a high-boiling alcohol, ether or amine and the water is distilled off *in vacuo*. Dispersions with a solids content up to 70 wt. % and a water content well below 3% can be obtained in this way, but there remains the problem of the emulsifier which cannot easily be removed from the dispersion.

US—A—3631141 and US—A—3637569 disclose one way of avoiding the problem of coagulation in aqueous dispersions without the need for a dispersing agent, according to which an aqueous dispersion of a fluorocarbon polymer is mixed with a liquid organic solvent, such as t-butanol, which has a relatively low surface tension, to form an azeotropic mixture. This mixture is distilled, water is separated from the distillate by conventional methods and the organic phase is returned to the mixture.

US—A—3769252 discloses a process for producing a substantially water-free dispersion of a fluorinated polymer by mixing an aqueous dispersion with a water-*immiscible* organic solvent, the polymer particles migrating into the organic phase which is then separated from the aqueous phase.

The present invention provides a process for preparing an organic dispersion of an acid-type fluorinated polymer which comprises copolymerizing a fluorinated ethylenically unsaturated monomer (II) with a functional monomer (I) having an acid type functional group, in an aqueous medium in the presence of a polymerization initiator source, to obtain an aqueous dispesion of an acid-type fluorinated polymer having units of said functional monomer in a proportion of 5 to 40 mol %; and replacing the aqueous medium of the aqueous dispersion with a hydrophilic organic medium while maintaining the dispersion.

The organic dispersion as referred to above means a dispersion of the fluorinated polymer in a hydrophilic organic medium which contains not more than 30%, preferably less than 20% of water. The hydrophilic organic medium is selected according to the proposed use of the organic dispersion.

Research into ways of preparing a solution having high concentration has shown the following interesting facts.

The fluorinated polymers having acid-type functional groups such as carboxylic acid, sulfonic acid or phosphonic acid type groups can be obtained in the form of an aqueous dispersion having high concentration by an emulsion polymerization in an aqueous medium. The aqueous medium of the dispersion can be replaced with a hydrophilic organic solvent such as an alcohol. The reason for this is not clear, but a stable organic dispersion can be obtained without any damage to the dispersion even though the aqueous medium is replaced with a hydrophilic organic solvent. Thus, the resulting organic dispersion can be used for the fabrication of a film in the same way as an organic solvent solution. In a typical process, an aqueous latex of a carboxylic acid-type fluorinated polymer can be separated into an aqueous medium and a latex layer with a higher concentration of the polymer by a suitable centrifugal separation. A hydrophilic organic medium is added to the concentrated latex and the centrifugal separation is repeated to decrease the content of the aqueous medium in the concentrated latex whereby the replacement with the hydrophilic organic medium is attained. The carboxylic acid-type fluorinated polymer is thus dispersed in the hydrophilic organic medium while maintaining the dispersion as in the aqueous latex, producing an organic dispersion with a high concentration of the polymer.

By the process of the present invention, an organic dispersion of high concentration, typically about 50 wt. % can be easily obtained using various kinds of hydrophilic organic media and the dispersion has excellent mechanical and chemical stability. The viscosity of the organic dispersion can be controlled as desired by selecting the type of the organic medium depending upon the intended use. Thus, an excellent film of a copolymer having no pinholes can be obtained by casting the organic dispersion.

In the process of the present invention, it is important to use a functional monomer having carboxylic acid, sulfonic acid or phosphonic acid groups or acid-type functional group which can be converted to such an acid group.

The acid type functional monomer (I) is preferably a fluorovinyl compound, to impart high chlorine resistance and oxidation resistance to the polymer.

Typical functional monomers used in the process of the present invention are fluorovinyl compounds having the formula

$$CF_2{=}CX{+}CFX'{+}_p{+}OCF_2CFY{+}_l{+}O{+}_m{+}CFY'{+}_nA$$

wherein p is 0 or 1; l is 0 to 3; m is 0 to 1; n is 0 to 12; X represents —F, —Cl or —$CF_3$; X′ represents —F or —$CF_3$; Y represents —F or —$CF_3$; Y′ represents —F or a $C_{1-10}$ perfluoroalkyl group and A represents —CN, —COF, —COOH, —$COOR_1$, —COOM or —$CONR_2R_3$, —$SO_2F$, —$SO_3M$, —$SO_3H$,

$$-\overset{\overset{\large O}{\|}}{P}(OH)_2, \quad -\overset{\overset{\large O}{\|}}{P}(OR^4)_2 \quad \text{or} \quad -\overset{\overset{\large O}{\|}}{P}(OM)_2$$

wherein R represents a $C_{1-10}$ alkyl group; $R_2$ and $R_3$ respectively represent —H or $R_1$; $R_4$ represents $R_1$ and M represents an alkali metal atom or a quaternary ammonium group.

From the viewpoints of properties and availability, it is preferable to use a fluorovinyl compound having the above-mentioned formula wherein X and X′ are —F; Y is —$CF_3$; Y′ is —F; p is 0 or 1; l is 0 to 1; m is 0 to 1; n is 0 to 8.

From the viewpoint of the copolymerization reaction, it is preferable to use a fluorovinyl compound having the formula wherein A is —$COOR_1$, —$SO_2F$ or

$$-\overset{\overset{\large O}{\|}}{P}(OR^4)_2$$

and R is a lower alkyl group.

Typical fluorovinyl compounds include

$CF_2{=}CFO(CF_2)_{1-8}COOCH_3$,
$CF_2{=}CFO(CF_2)_{1-8}COOC_2H_5$,
$CF_2{=}CF(CF_2)_{0-8}COOCH_3$,
$CF_2{=}CFOCF_2CF(CF_3)OCF_2CF_2CF_2COOCH_3$,
$CF_2{=}CFCF_2O(CF_2)_4COOCH_3$,
$CF_2{=}CFCF_2OCF_2CF_2OCF_2COOCH_3$,
$CF_2{=}CFCF_2OCF(CF_3)COOCH_3$,

$CF_2{=}CFCF_2OCF(CF_3)CF_2OCF(CF_3)COOCH_3$,
$CF_2{=}CFOCF_2CF(CF_3)OCF_2CF_2SO_2F$,
$CF_2{=}CF_2SO_2F$,
$CF_2{=}CFCF_2OCF_2CF_2SO_2F$ and

$$CF_2{=}CFO(CF_2)_{1-8}\overset{\overset{\displaystyle O}{\|}}{P}(OCH_3)_2.$$

The fluorinated ethylenically unsaturated monomers (II) can be tetrafluoroethylene, trifluorochloroethylene, hexafluoropropylene, trifluoroethylene, vinylidene fluoride and vinyl fluoride. It is preferable to use a fluorinated olefin having the formula $CF_2{=}CZZ'$ wherein Z and Z' respectively represent —F, —Cl, —H or —$CF_3$, especially perfluoroolefins. It is optimum to use tetrafluoroethylene.

Two or more of the functional monomers (I) and two or more of the ethylenically unsaturated monomers (II) can be used.

It is also possible to incorporate another monomer such as an olefin having the formula:

$$CH_2{=}CR_4R_5 \qquad \text{(III)}$$

($R_4$ and $R_5$ respectively represent —H, a $C_1$—$C_8$ alkyl group or an aromatic ring); a fluorovinyl ether having the formula:

$$CF_2{=}CFOR_f$$

($R_f$ represents a $C_1$—$C_{10}$ perfluoroalkyl group); a divinyl monomer such as $CF_2{=}CF{-}CF{=}CF_2$ or $CF_2{=}CFO(CF_2)_{1-4}OCF{=}CF_2$; or another functional monomer such as a carboxylic acid type or sulfonic acid type functional monomer; mixtures of such monomers may also be used.

Suitable olefins (III) include ethylene, propylene, butene-1, isobutylene, styrene, $\alpha$-methylstyrene, pentene-1, hexene-1, heptene-1,3-methyl butene-1 and 4-methyl pentene-1. It is especially preferable to use ethylene, propylene or isobutylene from the point of view of ease of production and characteristics of the resulting copolymers.

It is possible to improve mechanical strength of products such as films and membranes made from the dispersion by incorporating a divinyl monomer to crosslink the copolymer.

In the production of the acid-type fluorinated polymer of the present invention, the proportions of the functional monomer (I), the fluorinated olefin (II) and the olefin compound (III) or other monomer if used are important since they affect the characteristics of ion exchange membranes for electric cells or the stability of the dispersion in the replacement of the aqueous dispersion with the hydrophilic organic medium.

The amount of the functional monomer (I) directly affects the ion exchange capacity and also the stability of the dispersion and is preferably in a range of 5 to 50 mol. %, especially 10 to 30 mol. %. When the ratio of the functional monomer (I) is too high, the mechanical strength of the ion exchange membrane made from the product is inferior, as are the ion exchange properties, because of the increase of water content whereas when the ratio of the functional monomer (I) is too low, the desired ion exchange properties are not obtained. Moreover, the stability of the dispersion during the medium replacement is disadvantageously reduced.

It is not clear why the acid-type groups of the fluorinated polymer affect the stability of the dispersion. The carboxylic acid type, sulfonic acid type or phosphonic acid type fluorinated polymer maintains a stable dispersion in the concentrated latex, whereas a fluorinated polymer having no functional group such as a carboxylic or sulfonic acid group causes coagulation of the latex in the concentration process. Therefore, it is considered that the acid type groups may contribute to the stability of the dispersion. This discussion is however merely to illustrate the present invention without limiting its scope.

The remaining components of the copolymer of the invention besides the compound (I) are mainly the compounds (II) and optionally compound (III) or other comonomer. The proportion of the olefin (III) when used is important since it can greatly affect the electrical and mechanical characteristics of the ion exchange membrane such as its chlorine resistance. Therefore, when the olefin (III) is incorporated, the molar ratio of the olefin (III) to the fluorinated olefin (II) is preferably in a range of 5:95 to 70:30, especially 10:90 to 60:40. When the fluorovinyl ether or divinyl ether is incorporated, the proportion of this component is preferably in a range of less than 30 mol. % especially about 2 to 20 mol. %.

In a preferred embodiment of the present invention, the ion exchange capacity for the polymer is selected from the range of 0.5 to 2.2 meq/g dry resin.

It is a characteristic feature that the molecular weight of the copolymer can be large even though the ion exchange capacity is large. Therefore the mechanical property and the durability of the copolymer are not lowered by increasing the ion exchange capacity. The ion exchange capacity is dependent upon the type of copolymer, preferably higher than 0.8 meq/g dry resin and especially higher than 1.0 meq/g dry resin in view of the improved mechanical and electrochemical characteristics.

The molecular weight of the acid-type fluorinated polymer of the present invention is important since it affects the mechanical characteristics and the fabricability of the membrane. It is preferable for $T_Q$ to be higher than 150°C, more preferably 170 to 340°C and especially 180 to 300°C.

In the specification, $T_Q$ is defined as the temperature for a volumetric melt flow rate of 100 $mm^3/s$. It is related to the molecular weight of the copolymer. The volumetric melt flow rate is defined in units of $m^3/sec$ and is the flow rate of the molten copolymer extruded through the orifice having a diameter of 1 mm and a length of 2 mm at a specific temperature under a pressure of 30 $kg/cm^2$ (29,43 bar).

The ion exchange capacity of a cation exchange membrane is measured as follows.

An H-type cation exchange membrane is immersed in 1N-HCl at 60°C for 5 hours to convert it completely to an H-type membrane and the membrane is washed with water to free it of HCl. 0.5 g of the H-type membrane is immersed in a solution prepared by adding 25 ml of water to 25 ml of 0.1N-NaOH. Then the membrane is taken out and the amount of NaOH in the solution measured by a back titration with 0.1N-HCl.

In the process of the invention, it is preferable to carry out the copolymerization of the fluorinated monomer and the fluorinated olefin at a ratio of the aquoeus medium to the functional monomer of less than 20:1, more preferably less than 10:1 by weight.

When too much of the aqueous medium is present, the copolymerization reaction velocity is remarkably low, necessitating a long time to obtain a high yield of the copolymer and it is not easy to achieve a high molecular weight while retaining a high ion exchange capacity. Also a larger reactor and complicated processes for the separation and recovery of the copolymer are needed.

It is preferable to use a copolymerization reaction pressure of higher than 7 $kg/m^2$ (6.87 bar). When the reaction pressure is too low, it is difficult to maintain the reaction velocity at a satisfactory level and it is also difficult to obtain a copolymer having a large molecular weight. Furthermore, the ion exchange capacity of the resulting copolymer is remarkably large whereby its mechanical strength is lowered and deterioration of the ion exchange function is increased because of the high water content. The copolymerization reaction pressure is preferably lower than 50 $kg/cm^2$ (49 bar) so as to avoid the need for an expensive or a complicated industrial operation. Although it is possible to use a higher pressure, the effect of the present invention is not proportionally improved. In the present invention, the copolymerization reaction pressure is usually in a range of 7 to 50 $kg/cm^2$ (6.87 to 49 bar) preferably 9 to 30 $kg/cm^2$ (8.83 to 29.43 bar).

In the copolymerization of the present invention, the conditions for the reaction and other operations are not critical and can be selected from broad ranges. For example, the reaction temperature can be selected according to the type of polymerization initiator source and the molar ratios used in the reaction and is preferably in a range of 20 to 90°C, especially 30 to 80°C since high or low temperatures are disadvantageous in the industrial operation.

The polymerization initiator source used in the present invention is preferably selected so as to impart high activity at the optimum reaction temperature. For example, ionizing radiation of high activity can be employed at below room temperature. Usually it is advantageous to use an azo compound or a peroxy compound in the industrial operation.

Suitable polymerization initiator sources which may be used in the present invention include compounds having high activity at 20 to 90°C under the copolymerization reaction conditions, for example, diacyl peroxides such as disuccinic peroxide, benzoyl peroxide, lauroyl peroxide and dipentafluoropropionyl peroxide; azo compounds such as 2,2′-azobis(2-amidinopropane) hydrochloride, 4,4′-azobis(4-cyanovalerianic acid) and azobisisobutyronitrile; peroxy esters such as t-butyl peroxyisobutyrate, t-butyl peroxypivalate-peroxydicarbonates such as diisopropyl peroxydicarbonate and di-2-ethylhexyl peroxy-dicarbonate; hydroperoxides such as diisopropylbenzene hydroperoxide; and inorganic peroxides such as potassium persulfate and ammonium persulfate and redox catalysts thereof.

In the process of the present invention, the concentration of the polymerization initiator is usually in a range of 0.0001 to 3 wt. %, preferably 0.001 to 2 wt. % based on the total monomers. The molecular weight of the resulting copolymer can be increased and high ion exchange capacity can be maintained by decreasing the concentration of the initiator. When the concentration of the initiator is too high, the tendency to lower the molecular weight is increased which adversely affects the production of the copolymer having a large ion exchange capacity and high molecular weight.

It is possible to incorporate other additives used for polymerizations in an aqueous medium such as a surfactant, a dispersing agent, a buffering agent and a pH regulator. It is also possible to incorporate an inert organic solvent such as fluorinated or chlorofluorinated saturated hydrocarbons (known as Freon ® type solvents) provided this does not interrupt the copolymerization reaction of the fluorinated olefin and the functional monomer and has no substantial chain transferring effect.

In the process of the invention, it is preferable to carry out the copolymerization while maintaining the concentration of the resulting copolymer below 40 wt. %, preferably below 30 wt. %. When the concentration is too high, the disadvantages of high load for stirring, difficulty of heat removal and insufficient diffusion of the monomers are encountered.

Various processes can be employed for the medium replacement step provided the dispersion is maintained; for example, a combination of a centrifugal separation of an aqueous medium layer and an

addition of a hydrophilic organic medium; a combination of a separation of an aqueous medium layer by an electric decantation or freezing and an addition of a hydrophilic organic medium; or evaporating water after an addition of a hydrophilic organic medium having a boiling point higher than that of water.

Usually it is effective to select a process which comprises a centrifugal separation of an aqueous medium, an addition of a hydrophilic organic medium to the concentrated layer and a further centrifugal separation so as to replace the aqueous medium gradually with the hydrophilic organic medium.

The hydrophilic organic media used in the replacement of the present invention can be selected from the various liquid media, usually water soluble organic liquid media so as to achieve a smooth and effective replacement and separation of the aqueous medium, and especially an organic liquid medium which dissolves in water to a degree higher than 0.5 wt. %.

Suitable hydrophilic organic media include alcohols, ketones, organic acids and aldehydes, amines, and also hydrophilic organic liquids which are miscible with water but not soluble in water such as pyrrolidones, esters and ethers. A mixed liquid medium can be used.

The hydrophilic organic medium is added to the concentrated latex to replace the aqueous medium and the operation is repeated depending upon the allowable concentration of water remaining in the organic dispersion. A few repetitions are usually enough. The amount of the hydrophilic organic medium added is not critical and is usually in a range of 0.5 to 20 wt. % based on the polymer.

In accordance with the present invention, it is possible to impart a concentration to the organic dispersion as high as 60 wt. %, usually in a range of 5 to 50 wt. % and preferably 10 to 40 wt. %.

The viscosity of the organic dispersion is varied from 10 cps to $10\times10^6$ cps (0.01 to 10000 Pa . s) depending upon the concentration of the dispersion and the type of hydrophilic organic medium used. For the preparation of a film of the copolymer e.g. by casting, it is usually in a range of 100 cps to 10,000 cps (0.1 to 10 Pa . s).

The organic dispersion obtained by the process of the present invention can be utilized in the same way as an organic solvent solution and can be used for various purposes. Because it is possible to achieve such a high concentration the range of uses of the organic dispersion is broad and effective. The organic dispersion can be fabricated into a film or sheet having a desired shape for electrolysis, dialysis or a fuel cell by casting the organic dispersion or impregnating it into a porous substrate made of asbestos or polytetrafluoroethylene and evaporating the hydrophilic organic medium. Moreover, the organic dispersion is remarkably effective for repairing pin holes and torn parts of a film or membrane. The organic dispersion can also be effectively used for coating a surface of a substrate such as a spacer net or an electrode.

A further understanding can be obtained by reference to the following specific examples which are provided herein for purposes of illustration only and are not to be construed as limiting the scope of the invention.

Example 1

In a 0.2 liter stainless steel autoclave, 100 g of deionized water, 0.2 g of $C_8F_{17}COONH_4$, 0.5 g of $Na_2HPO_4 . 12H_2O$, 0.3 g of $NaH_2PO_4 . 2H_2O$ and 0.026 g of $(NH_4)_2S_2O_8$ were charged and then 20 g of

$$CF_2{=}CFO(CF_2)_3COOCH_3$$

was charged. Air in the autoclave was purged with liquid nitrogen, the autoclave was heated at 57°C and tetrafluoroethylene was fed to a pressure of 11.0 kg/cm² (10.79 bar) to react them. During the reaction, tetrafluoroethylene was continuously fed to maintain the pressure at 10.79 bar. After 4.5 hours, the unreacted tetrafluoroethylene was purged to finish the reaction. The unreacted

$$CF_2{=}CFO(CF_2)_3COOCH_3$$

was separated by extracting it with trichlorotrifluoroethane to obtain a stable aqueous dispersion having a concentration of 19 wt. %. The proportion of

$$CF_2{=}CFO(CF_2)_3COOCH_3$$

in the copolymer was 20.3 mol. %. The aqueous dispersion was separated into an aqueous layer and a polymer concentrated layer by a centrifugal separator. The aqueous layer was removed, the same amount of water was added and the centrifugal separation was repeated. The operation was repeated for 3 times to remove electrolytes used in the polymerization. In the concentrated layer, 15 g of an organic mixture of N-methylpyrrolidone and methanol (2.5:1 by weight) was added to form a dispersion and the centrifugal operation was repeated. The organic mixture was added to the concentrated layer to prepare an organic dispersion having a concentration of the copolymer of 20 wt. % which had a viscosity of 1,000 cps (1 Pa . s).

The organic dispersion was flow-spread on a clean glass plate (washed) and was kept at 50°C for 10 hours and then, at 150°C for 5 hours in an electric oven to obtain a desired film of the copolymer

having a thickness of 300 $\mu$m. The film was hydrolyzed to obtain an ion exchange membrane having an ion exchange capacity of 1.43 meq/g dry resin.

Example 2

In accordance with the process of Example 1 except that propanol was used instead of the organic mixture of N-methylpyrrolidone and methanol, an organic dispersion having a copolymer concentration of 35 wt. % was obtained. The organic dispersion had a viscosity of 250 cps (0.25 Pa . s) and was flow-spread on a glass plate and kept at 50°C for 20 hours to obtain a desired film.

Example 3

In accordance with the process of Example 1 except that

$$CF_2{=}CFOCF_2\underset{\displaystyle CF_3}{\underset{|}{C}}FO(CF_2)_3COOCH_3$$

was charged instead of

$$CF_2{=}CFO(CF_2)_3COOCH_3$$

and the reaction pressure was changed to 13 kg/cm$^2$ (12.75 bar), the copolymerization was carried out to obtain 19 wt. % of an aqueous dispersion of a copolymer having a content of

$$CF_2{=}CFOCF_2\underset{\displaystyle CF_3}{\underset{|}{C}}FO(CF_2)_3COOCH_3$$

of 16.0 mol %.

The aqueous dispersion was treated with an ion exchange resin to remove the electrolytes. In the aqueous dispersion, 100 g of diethyleneglycol monomethyl ether was added and water was evaporated by a rotary evaporator and diethyleneglycol monomethyl ester was added. The operation was repeated for 3 times and diethyleneglycol monomethyl ester was concentrated to obtain a stable organic dispersion having a copolymer concentration of 30 wt. % and a viscosity of 380 cps (0.38 Pa . s).

Example 4

In a 0.2 liter stainless steel autoclave, 100 g of deionized water, 0.2 g of $C_8F_{17}COONH_4$, 0.5 g of $Na_2HPO_4 . 12H_2O$, 0.3 g of $NaH_2PO_4 . 2H_2O$ and 0.026 g of $(NH_4)_2S_2O_8$ were charged and then, 20 g of

$$CF_2{=}CFOCF_2CF(CF_3)OCF_2CF_2SO_2F$$

was charged. Air in the autoclave was purged with liquid nitrogen and the autoclave was heated at 57°C and tetrafluoroethylene was fed to a pressure of 15.0 kg/cm$^2$ (14.71 bar) to react them. During the reaction, tetrafluoroethylene was continuously fed to maintain the pressure of 14.71 bar.

After 3.5 hours, the unreacted tetrafluoroethylene was purged to finish the reaction. The unreacted

$$CF_2{=}CFOCF_2CF(CF_3)OCF_2CF_2SO_2F$$

was separated by extracting it with tirchlorotrifluoroethane to obtain a stable aqueous dispersion having a concentration of 19 wt. %. The content of

$$CF_2{=}CFOCF_2CF(CF_3)OCF_2CF_2SO_2F$$

in the copolymer was 12.1 mol %. The aqueous dispesion was separated into an aqueous layer and a polymer concentrated layer by means of a centrifugal separator. The aqueous medium was removed the same amount of water was added and the centrifugal separation was repeated.

The operation was repeated 3 times to remove electrolytes used in the polymerization. In the concentrated layer, 15 g of an organic mixture of N-methylpyrrolidone and methanol (2.5:1 by weight) was added to form a dispersion and the centrifugal operation was repeated. The organic mixture was added to the concentrated layer to prepare an organic dispersion having a concentration of the copolymer of 20 wt. % which had a viscosity of 1,200 cps (1.2 Pa . s).

The organic dispersion was flow-spread on a clean glass plate (washed) and was kept at 50°C for 10 hours and then at 150°C for 5 hours in an electric oven to obtain a desired film of the copolymer having a thickness of 300 $\mu$m. The film was hydrolyzed to obtain an ion exchange membrane having an ion exchange capacity of 0.85 meq/g dry resin.

Example 5

In accordance with the process of Example 4 except that propanol was used instead of the organic mixture of N-methylpyrrolidone and methanol, an organic dispersion having a copolymer concentration of 35 wt. % was obtained. The organic dispersion had a viscosity of 300 cps (0.3 Pa . s) and was flow-spread on a glass plate and kept at 50°C for 20 hours to obtain a desired film.

Example 6

In accordance with the process of Example 4 except that

$$CF_2{=}CFO(CF_2)_3\overset{\overset{O}{\|}}{P}(OCH_3)_2$$

was charged instead of

$$CF_2{=}CFOCF_2CF(CF_3)OCF_2CF_2SO_2F$$

and the reaction pressure was changed to 14 kg/cm$^2$ (13.73 bar), the copolymerization was carried out to obtain 19 wt. % of an aqueous dispersion of a copolymer having a component of

$$CF_2{=}CFO(CF_2)_3\overset{\overset{O}{\|}}{P}(OCH_3)_2$$

of 14.3 mol %. The aqueous dispersion was treated with an ion exchange resin to remove the electrolytes. In the aqueous dispersion, 100 g of diethyleneglycol monomethyl ether was added and water was evaporated by a rotary evaporator and diethyleneglycol monomethyl ether was added. The operation was repeated 3 times and diethyleneglycol monomethyl ester was concentrated to obtain a stable organic dispersion having a concentration of 30 wt. % and a viscosity of 420 cps (0.42 Pa . s).

## Claims

1. A process for preparing an organic dispersion of an acid-type fluorinated polymer prepared by copolymerizing a fluorinated ethylenically unsaturated monomer (II) with a functional monomer (I) having an acid type functional group in the presence of a polymerization initiator source, to obtain an acid type fluorinated polymer having units of said functional monomer in a proportion of 5 to 40 mol %, characterised in that the polymerization is carried out in an aqueous medium and the aqueous medium of the resulting dispersion is then replaced with a hydrophilic organic medium while maintaining the dispersion.

2. A process according to Claim 1 wherein said functional monomer (I) is a fluorovinyl compound having the formula

$$CF_2{=}CX{+}CFX'{+}_p{+}OCF_2CFY{+}_l{+}O{+}_m{+}CFY'{+}_nA$$

wherein p is 0 or 1; l is 0 to 3; m is 0 to 1; n is 0 to 12; X represents —F, —Cl or —$CF_3$; X′ represents —F or —$CF_3$; Y represents —F or —$CF_3$; Y′ represents —F or a $C_{1-10}$ perfluoroalkyl group and A represents —CN, —COF, —COOH, —$COOR_1$, —COOM, —$CONR_2R_3$, —$SO_2F$, —$SO_3M$, —$SO_3H$,

$$-\overset{\overset{O}{\|}}{P}(OH)_2, \quad -\overset{\overset{O}{\|}}{P}(OR^4)_2 \quad \text{or} \quad -\overset{\overset{O}{\|}}{P}(OM)_2$$

wherein $R_1$ represents a $C_{1-10}$ alkyl group; $R_2$ and $R_3$ respectively represent —H or $R_1$; $R_4$ represents $R_1$ and M represents an alkali metal atom or a quaternary ammonium group.

3. A process according to Claim 1 or Claim 2 wherein said fluorinated ethylenically unsaturated monomer (II) is a fluorinated olefin having the formula $CF_2{=}CZZ'$ wherein Z and Z′ respectively represent —F, —Cl, —H or —$CF_3$.

4. A process according to Claim 2 wherein said functional monomer (I) is a fluorovinyl compound having the formula

$$CF_2{=}CF{-}(OCF_2\underset{\underset{CF_3}{|}}{C}F)_q{-}(O)_r{-}(CF_2)_s{-}B$$

wherein q is 0 or 1; r is 0 or 1; s is 0 or an integer from 1 to 8; and B represents —COOR, —$SO_2F$ or

$$\overset{O}{\overset{\|}{-P}}(OR)_2$$

wherein R represents a lower alkyl group.

5. A process according to Claim 3 wherein said fluorinated ethylenically unsaturated monomer (II) is tetrafluoroethylene.

6. A process according to any preceding Claim wherein said copolymerization is carried out at 20 to 90°C.

7. A process according to any preceding Claim wherein said copolymerization is carried out under a pressure of higher than 6.86 bar.

8. A process according to any preceding Claim wherein said copolymerization is carried out while maintaining the concentration of said acid type fluorinated polymer below 40 wt. % in the aqueous dispersion.

9. A process according to any preceding Claim wherein said hydrophilic organic medium is selected from alcohols, ketones, organic acids, aldehydes, amines, pyrrolidones, esters and ethers.

10. A process according to any preceding Claim wherein said hydrophilic organic medium contains water in an amount not exceeding 30 wt. % based on the total liquid medium.

11. A process according to any preceding Claim wherein said organic dispersion is obtained by separating a part of the water from said aqueous dispersion, adding said hydrophilic organic medium, separating a part of the medium from the dispersion and adding further hydrophilic organic medium.

**Patentansprüche**

1. Verfahren zur Herstellung einer organischen Dispersion eines fluorierten Polymeren vom Säuretyp, welches hergestellt wurde durch Copolymerisation eines fluorierten äthylenisch ungesättigten Monomeren (II) mit einem funktionellen Monomeren (I), welches eine funktionelle Gruppe vom Säuretyp aufweist, in Gegenwart einer Polymerisationsstarterquelle zur Schaffung eines fluorierten Polymeren vom Säuretyp, welches Einheiten des funktionellen Monomeren in einem Mengenverhältnis von 5 bis 40 Mol-% aufweist, dadurch gekennzeichnet, daß man die Polymerisation in einem wässrigen Medium durchführt und das wässrige Medium der resultierenden Dispersion anschließend unter Aufrechterhaltung der Dispersion durch ein hydrophiles organisches Medium ersetzt.

2. Verfahren nach Anspruch 1, wobei das funktionelle Monomere (I) eine Fluorvinylverbindung der Formel

$$CF_2{=}CX(CFX')_p(OCF_2CFY)_l(O)_m(CFY')_nA$$

ist, worin p für 0 oder 1 steht; 1 für 0 bis 3 steht; m für 0 bis 1 steht; n für 0 bis 12 steht; X für —F, —Cl oder —$CF_3$ steht; X' für —F oder —$CF_3$ steht; Y für —F oder —$CF_3$ steht; Y' für —F oder eine $C_{1-10}$-Perfluoralkylgruppe steht und A für —CN, —COF, —COOH, —$COOR_1$, —COOM, —$CONR_2R_3$, —$SO_2F$, —$SO_3M$, —$SO_3H$,

$$\overset{O}{\overset{\|}{-P}}(OH)_2, \quad \overset{O}{\overset{\|}{-P}}(OR^4)_2 \quad \text{oder} \quad \overset{O}{\overset{\|}{-P}}(OM)_2$$

steht, worin $R_1$ eine $C_{1-10}$-Alkylgruppe bedeutet; $R_2$ und $R_3$ jeweils —H oder $R_1$ bedeuten, $R_4$ für $R_1$ steht und M ein Alkalimetallatom oder eine quarternäre Ammoniumgruppe bedeutet.

3. Verfahren nach Anspruch 1 oder Anspruch 2, wobei das fluorierte äthylenisch ungesättigte Monomere (II) ein fluoriertes Olefin der Formel $CF_2{=}CZZ'$ ist, worin Z und Z' jeweils für —F, —Cl, —H oder —$CF_3$ stehen.

4. Verfahren nach Anspruch 2, wobei das funktionelle Monomere (I) eine Fluorvinylverbindung der Formel

$$CF_2{=}CF{-}(OCF_2\underset{CF_3}{\underset{|}{CF}})_q{-}(O)_r{-}(CF_2)_s{-}B$$

ist, worin q für 0 oder 1 steht; r für 0 oder 1 steht; s für 0 oder eine ganze Zahl von 1 bis 8 steht; und B für —COOR, —$SO_2F$ oder

$$\overset{O}{\overset{\|}{-P}}(OR)_2$$

steht, worin R eine niedere Alkylgruppe bedeutet.

5. Verfahren nach Anspruch 3, wobei das fluorierte äthylenisch ungesättigte Monomere (II) Tetrafluoräthylen ist.

6. Verfahren nach einem der vorstehenden Ansprüche, wobei die Copolymerisation bei 20 bis 90°C durchgeführt wird.

7. Verfahren nach einem der vorstehenden Ansprüche, wobei die Copolymerisation unter einem Druck von über 6,86 bar durchgeführt wird.

8. Verfahren nach einem der vorstehenden Ansprüche, wobei die Copolymerisation durchgeführt wird unter Aufrechterhaltung der Konzentration des fluorierten Polymeren vom Säuretyp in der wässrigen Dispersion unterhalb 40 Gew.-%.

9. Verfahren nach einem der vorstehenden Ansprüche, wobei das hydrophile organische Medium ausgewählt ist aus Alkoholen, Ketonen, organischen Säuren, Aldehyden, Aminen, Pyrrolidonen, Estern und Äthern.

10. Verfahren nach einem der vorstehenden Ansprüche, wobei das hydrophile organische Medium Wasser in einer Menge enthält, die 30 Gew.-%, bezogen auf das gesamte flüssige Medium nicht übersteigt.

11. Verfahren nach einem der vorstehenden Ansprüche, wobei die organische Dispersion erhalten wurde, in dem man einen Teil des Wassers von der wässrigen Dispesion abtrennt, das hydrophile organische Medium zusetzt, einen Teil des Mediums von der Dispersion abtrennt und weiteres hydrophiles organisches Medium zusetzt.

**Revendications**

1. Procédé de préparation d'une dispersion organique d'un polymère fluoré du type acide préparé par copolymérisation d'un monomère éthyléniquement insaturé fluoré (II) avec un monomère fonctionnel (I) comportant un groupe fonctionnel du type acide en présence d'une source d'initiateur de polymérisation, avec obtention d'un polymère fluoré du type acide présentant des unités dudit monomère fonctionnel dans une proportion de 5 à 40% en moles, caractérisé par le fait que l'on effectue la polymérisation dans un milieu aqueux et que l'on remplace ensuite le milieu aqueux de la dispersion résultante par un milieu organique hydrophile tout en maintenant la dispersion.

2. Procédé selon la revendication 1, dans lequel ledit monomère fonctionnel (I) est un composé fluorovinylique ayant la formule

$$CF_2{=}CX{\leftarrow}CFX'{\rightarrow}_p{\leftarrow}OCF_2CFY{\rightarrow}_l{\leftarrow}O{\rightarrow}_m{\leftarrow}CFY'{\rightarrow}_nA$$

dans laquelle p est 0 ou 1; 1 est 0 à 3; m est 0 à 1; n est 0 à 12; X représente —F, —Cl ou —$CF_3$; X' représente —F ou —$CF_3$; Y représente —F ou —$CF_3$; Y' représente —F ou un groupe perfluoroalkyle en $C_{1-10}$ et A représente —CN, —COF, —COOH, —$COOR_1$, —COOM, —$CONR_2R_3$, —$SO_2F$, —$SO_3M$, —$SO_3H$,

$$-\overset{O}{\overset{\|}{P}}(OH)_2,\quad -\overset{O}{\overset{\|}{P}}(OR^4)_2\quad \text{ou}\quad -\overset{O}{\overset{\|}{P}}(OM)_2$$

où $R_1$ représente un groupe alkyle en $C_{1-10}$; $R_2$ et $R_3$ représentent respectivement —H ou $R_1$; $R_4$ représente $R_1$ et M représente un atome d'un métal alcalin ou un groupe ammonium quaternaire.

3. Procédé selon la revendication 1 ou 2, dans lequel ledit monomère éthyléniquement insaturé fluoré (II) est une oléfine fluorée ayant la formule $CF_2{=}CZZ'$ dans laquelle Z et Z' représentent respectivement —F, —Cl, —H ou —$CF_3$.

4. Procédé selon la revendication 2, dans lequel ledit monomère fonctionnel (I) est un composé fluorovinylique ayant la formule

$$CF_2{=}CF{-}(OCF_2\underset{\substack{|\\CF_3}}{CF})_q{-}(O)_r{-}(CF_2)_s{-}B$$

dans laquelle q est 0 ou 1; r est 0 ou 1; s est 0 ou un nombre entier de 1 à 8; et B représente —COOR, —$SO_2F$ ou

$$-\overset{O}{\overset{\|}{P}}(OR)_2$$

où R représente un groupe alkyle inférieur.

5. Procédé selon la revendication 3, dans lequel le monomère éthyléniquement insaturé fluoré (II) est le tétrafluoroéthylène.

6. Procédé selon l'une quelconque des revendications précédentes dans lequel on effectue ladite copolymérisation à une température de 20°C à 90°C.

7. Procédé selon l'une quelconque des revendications précédentes dans lequel on effectue la copolymérisation sous une pression supérieure à 6,86 bars.

8. Procédé selon l'une quelconque des revendications précédentes dans lequel on effectue ladite copolymérisation en maintenant la concentration dudit polymère fluoré du type acide en-dessous de 40% en poids dans la dispersion aqueuse.

9. Procédé selon l'une quelconque des revendications précédentes dans lequel ledit milieu organique hydrophile est choisi parmi des alcools, cétones, acides organiques, aldéhydes, amines, pyrrolidones, esters et éthers.

10. Procédé selon l'une quelconque des revendications précédentes dans lequel ledit milieu organique hydrophile contient de l'eau en une quantité non supérieure à 30% en poids par rapport au milieu liquide total.

11. Procédé selon l'une quelconque des revendications précédentes dans lequel ladite dispersion organique est obtenue par séparation d'une partie de l'eau à partir de ladite dispersion aqueuse, addition dudit milieu organique hydrophile, séparation d'une partie du milieu à partir de la dispersion et addition d'une nouvelle quantité du milieu organique hydrophile.